# FASCICULE DE BREVET EUROPEEN

(11) **EP 1 449 729 B1**
(45) Date de publication et mention de la délivrance du brevet: **09.04.2008**
(21) Numéro de dépôt: 04003360.7
(22) Date de dépôt: 16.02.2004
(51) Int. Cl.: B60T 7/04, B60T 11/16, B60T 17/22, G01D 5/14, F15B 15/28, B60Q 1/44

(54) **Maître cylindre de véhicule automobile avec dispositif de détection d'actionnement d'un système de freinage, en particulier de la position du piston**
Master-Zylinder für Kraftfahrzeuge mit einer Vorrichtung zur Ermittlung der Bremsbetätigung, insbesondere der Position des Kolbens
Master-cylinder for vehicles with a system for detecting the braking action, in particular the position of the piston

(30) Priorité: 21.02.2003 FR 0302203
(43) Date de publication de la demande: 25.08.2004
(73) Titulaire: ROBERT BOSCH GMBH, 70442 Stuttgart (DE)
(72) Inventeur: Masson, Olivier, 75019 Paris (FR); Fourcade, Jean, 77420 Champs Sur Marne (FR)
(74) Mandataire: Hurwic, Aleksander Wiktor

(56) Documents cités:
- EP-A- 1 254 819
- WO-A-02/36400
- WO-A-87/06656
- DE-A- 10 133 163
- FR-A- 2 664 946
- FR-A- 2 713 757
- FR-A- 2 825 331
- FR-A- 2 848 936
- US-A- 4 914 916
- US-A- 5 477 675
- US-B1- 6 346 806

## Description

La présente invention a pour objet un maître cylindre de véhicule automobile avec dispositif de détection d'actionnement d'un système de freinage. Elle vise plus précisément un positionnement particulier de ce dispositif de détection d'actionnement d'un système de freinage sur le maître cylindre. Le document FR-2825331 décrit un maître cylindre selon le préambule de la revendication 1.

L'invention a pour but de fournir un système de détection précoce d'un freinage de véhicule. L'invention a également pour but de proposer un tel système de détection de freinage qui soit facilement accessible à un conducteur ou à un réparateur, lorsqu'une manipulation du système est nécessaire. Un but supplémentaire de l'invention est de fournir un maître cylindre, comportant un tel dispositif de détection d'actionnement d'un système de freinage, dont l'encombrement dans le compartiment moteur est faible.

Généralement, la détection d'un actionnement d'un système de freinage d'un véhicule est à proximité d'une pédale de frein. Un tel système de détection sert, entre autre, à commander l'allumage et l'extinction des feux de ralentissement d'un véhicule. Ces feux de ralentissement, ou feux stop, doivent donc être allumés de façon précoce. C'est-à-dire qu'ils doivent être allumés dès le premier instant de freinage du véhicule.

Dans l'état de la technique, on dispose un interrupteur à proximité d'une pédale de frein. Un enfoncement de la pédale de frein permet d'actionner l'interrupteur et d'allumer les feux de stop. La proximité entre l'interrupteur et la pédale de frein permet d'avoir un allumage précoce des feux de stop. Cependant, un tel dispositif nécessite un emplacement particulier et peu accessible : l'habitacle. Aussi, en cas de dysfonctionnement, ou de simple contrôle, le dispositif est difficilement accessible. Par ailleurs, l'espace dans l'habitacle étant compté, les dimensions du dispositif doivent être calculées et contrôlées de manière précise.

On connaît également un dispositif de détection d'actionnement de système de freinage fixé à une extrémité d'un maître cylindre. Dans ce cas, le maître cylindre a une longueur plus importante qu'un maître cylindre ne comprenant pas ce dispositif. En effet, le dispositif de détection d'actionnement du système de freinage, intégré en fin de maître cylindre, rallonge d'autant la longueur du maître cylindre.

Dans un tel dispositif, un conducteur appui par exemple sur une pédale de frein, qui pousse une tige de commande. La tige de commande actionne un piston d'un maître cylindre. Le piston, disposé dans un alésage d'un corps de maître cylindre, avance à l'intérieur du maître cylindre. L'avancée du piston permet le déplacement d'une pièce magnétique mobile. La pièce magnétique mobile ferme, par exemple, un circuit magnétique.

Le circuit magnétique est disposé en fin du maître cylindre, dans la longueur du maître cylindre. Par exemple, en position ouverte, le circuit magnétique ne permet pas l'allumage des feux de stop. Quand la pédale de frein est actionnée, la pièce mobile se déplace et ferme le circuit magnétique qui allume alors les feux de stop.

Le circuit magnétique est généralement composé d'au moins une pièce polaire, d'un aimant et d'un détecteur magnétique. La pièce magnétique mobile est également une pièce polaire.

Le déplacement de la pièce magnétique mobile doit avoir lieu immédiatement après le déplacement de la pédale de frein, afin que les feux de stop s'allument de façon précoce lors d'un freinage. Bien qu'un tel dispositif permette une détection précoce du freinage et que ce dispositif soit facilement accessible, puisque dans le compartiment moteur, il a un encombrement trop important.

La présente invention propose donc un maître cylindre pour système de freinage de véhicule automobile comportant un dispositif de détection précoce d'actionnement d'un système de freinage. Le dispositif de l'invention est également d'accès facile pour un conducteur ou un réparateur. De plus l'encombrement du dispositif dans le compartiment moteur est réduit.

Le principe de l'invention consiste à détecter un mouvement d'un piston de maître cylindre via un capteur de position magnétosensible. Ainsi ce n'est plus le mouvement direct de la pédale qui est pris en compte, mais un mouvement d'une pièce entraînée indirectement par un mouvement de la pédale. L'invention consiste également à placer un tel dispositif de détection sur le corps du maître cylindre, de manière à ce que l'encombrement du maître cylindre dans le compartiment moteur soit faible. Le dispositif de détection comporte un capteur de position magnétosensible, dont une partie est solidaire du piston de maître cylindre. Ainsi, le moindre déplacement du piston de maître cylindre modifie l'état d'un circuit magnétique. Le circuit magnétique étant relié à un circuit électrique allumant et éteignant les feux de stop, le changement d'état du circuit magnétique permet d'allumer et/ou d'éteindre les feux de stop.
L'invention a donc pour objet un maître cylindre pour un système de freinage d'un véhicule automobile selon la revendication 1.

La présente invention a également pour objet un maître cylindre caractérisé en ce que ledit dispositif de détection comporte un premier circuit magnétique et un deuxième circuit magnétique, le premier circuit étant muni d'un aimant et le deuxième circuit magnétique étant muni d'un circuit de type ILS, de manière à ce que lorsque le piston est au repos un flux magnétique susceptible de circuler dans lé deuxième circuit magnétique est insuffisant pour activer le circuit ILS.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue en coupe transversale d'un maître cylindre intégrant un capteur de position conforme à l'invention ;
- Figure 2 : une représentation d'un circuit magnétique selon un exemple particulier de réalisation de l'invention ;
- Figure 3 : une représentation d'un circuit magnétique selon un autre exemple particulier de réalisation de l'invention ;
- Figure 4a : une représentation générale en coupe transversale d'un maître cylindre, selon un mode particulier de réalisation de l'invention ;
- Figure 4b : une vue en perspective d'un circuit magnétique de la figure 4a.

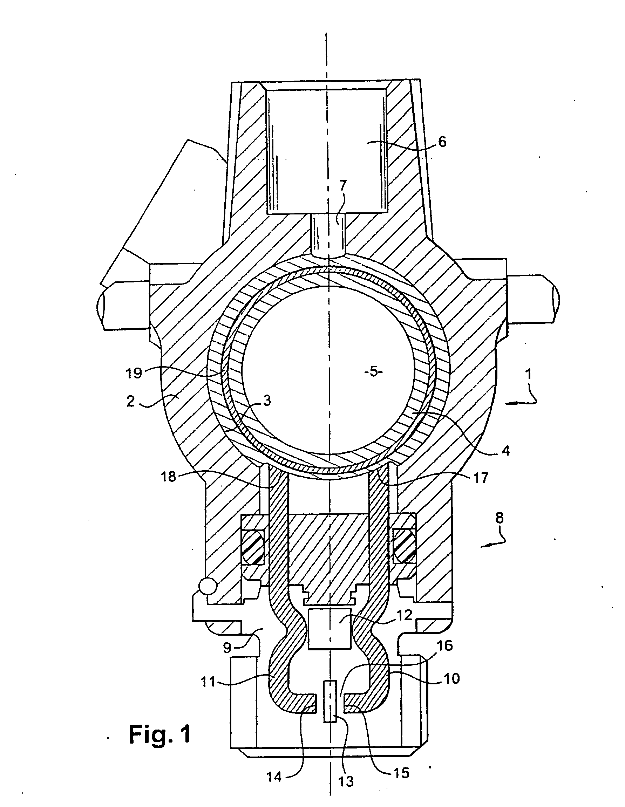

Sur la figure 1 est représenté un maître cylindre 1 de forme générale cylindrique. Dans un corps 2 du maître cylindre 1 est ménagé un alésage 3. un piston 4 se déplace en translation dans l'alésage 3.

Dans le cas d'un maître cylindre tandem, c'est préférentiellement un piston secondaire qui est représenté par le piston 4. En effet dans un maître cylindre tandem, le déplacement du piston secondaire est le plus représentatif du déplacement de la pédale de frein. Le déplacement du piston fait varier le volume d'une chambre de pression 5.

Sur le maître cylindre 1 est fixé un réservoir de liquide hydraulique (non représenté). Le liquide hydraulique est distribué par exemple à des plaquettes de frein. Des embouts tubulaires du réservoir hydraulique sont, par exemple, enfoncés dans un alésage 6 dont les dimensions correspondent aux dimensions de l'embout tubulaire du réservoir. Un orifice d'alimentation 7 permet le passage du liquide hydraulique depuis le réservoir de liquide hydraulique jusqu'à la chambre 5 du maître cylindre. On considère que l'alésage 6 est situé sur un haut de maître cylindre 3.

Une zone basse 8 du maître cylindre 1, opposée à l'alésage 6, comporte un système 9 de détection d'actionnement d'un système de freinage. Le système de détection 9 est un système magnétosensible. Il comporte un circuit magnétique. Par exemple, il comporte 2 pièces polaires 10 et 11. Un aimant 12 est disposé entre les 2 branches 10 et 11. L'aimant 12 peut être un aimant permanent polarisé. Un détecteur magnétique 13, ou capteur, est disposé également entre les 2 pièces polaires 10 et 11. Un entrefer 16 est formé à l'endroit de l'aimant 12 et à l'endroit du capteur 13. Un autre entrefer est formé à l'endroit de la pièce magnétique 19 mobile.

Sur la figure 1, le détecteur magnétique 13 ferme un coté du circuit magnétique, c'est-à-dire qu'il est disposé entre une extrémité 14 basse de la pièce polaire 11 et une extrémité 15 basse de la pièce polaire 10. L'aimant 12 est disposé entre le détecteur magnétique 13 et le piston 4.

Il est également possible d'inverser la position de l'aimant 12 et du détecteur magnétique 13.

Il est évidemment possible de prévoir 3 pièces polaires plutôt que les deux pièces polaires 10 et 11. Par exemple, un espace est ménagé entre deux pièces polaires, un aimant magnétique étant disposé dans cet espace. Une troisième pièce polaire ferme le circuit. Le détecteur magnétique peut alors être logé dans un second espace formé par l'une des deux premières pièces polaires et par la troisième pièce polaire.

Sur la figure 1, des extrémités 17 et 18 hautes des pièces polaires 10 et 11 débouchent dans l'alésage 3 au niveau du piston 4. Sur le piston 4 est fixé, ou surmoulé, une pièce magnétique mobile 19. Cette pièce magnétique mobile 19 vient ouvrir ou fermer le circuit magnétique 9. La pièce magnétique mobile 19 est également une pièce polaire.

Les pièces polaires sont par exemple en acier. Le maître cylindre peut par exemple être en aluminium, ou en tout autre matériau non magnétique.

La pièce polaire 19, montée sur le piston 4, se déplace en translation dans l'alésage 3 du maître cylindre 1. La disposition de la pièce mobile 19 est telle que le déplacement du piston 4, et donc de la pièce mobile 19, vient ouvrir, ou fermer, le circuit magnétique.

Sur la figure 1, la pièce mobile 19 suit le contour du piston 4. Cependant, il est possible que la pièce mobile 19 ne suive pas tout le contour du piston 4. En effet, il suffit que la pièce mobile 19 ait les dimensions suffisantes pour fermer le circuit magnétique 9, au niveau des extrémités 17 et 18 des pièces polaires 10 et 11. Aussi on peut prévoir une pièce mobile 19 ayant par exemple une forme semi-cylindrique disposée dans la partie basse du cylindre formant le piston 4.

Le piston 4, actionné indirectement par la pédale de frein, se déplace en translation dans l'alésage 3. Le mouvement du piston 4 entraîne le déplacement de la pièce mobile 19. Ce déplacement entraîne une variation de la valeur du champ magnétique. Le capteur 13 mesure cette variation. Le capteur 13 est relié à un système électrique (non représenté) qui commande l'allumage ou l'extinction des feux de stop, selon la valeur du champ magnétique dans l'entrefer 16.

On comprend bien qu'un maître cylindre selon l'invention a un encombrement moins important, dans le compartiment moteur, que celui de l'état de la technique. En effet, le dispositif de détection n'étant pas fixé à une extrémité du maître cylindre, sa longueur n'est pas augmentée par rapport à un maître cylindre dépourvu de dispositif de détection d'actionnement du système de freinage.

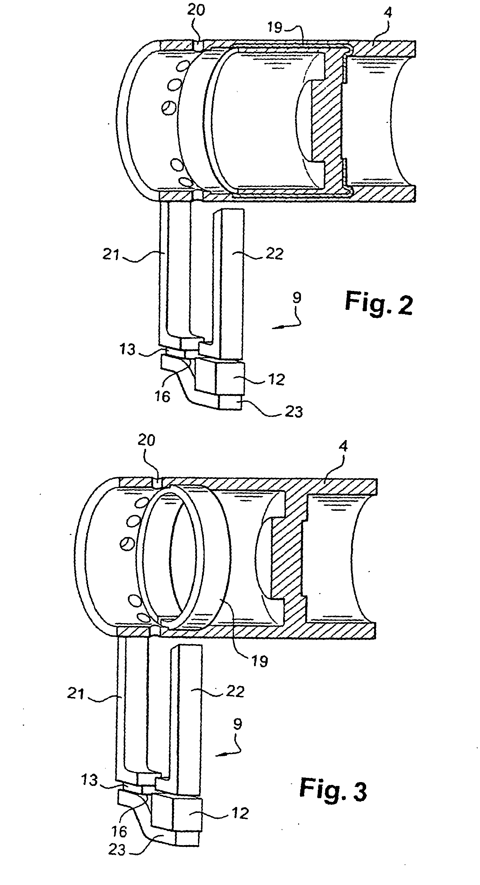

Sur les figures 2 et 3 est représentée une coupe longitudinale d'un circuit magnétique intégré dans un maître cylindre de l'invention. Le maître cylindre (non représenté sur les figure 2 et 3), est un maître cylindre à trous de dilatation. Le maître cylindre peut également être un maître cylindre à clapet, ou tout autre maître cylindre connu.

Le piston 4 est muni d'un trou de dilatation 20.

Le circuit magnétique 9 est formé, sur les figures 2 et 3, par trois pièces polaires 21, 22 et 23 fixes. Les pièces polaires 21, 22 et 23 forment par exemple un U. Les pièces polaires 21 et 22 forment deux branches du U, et sont perpendiculaires au piston 4. La pièce polaire 23 forme une base du U, parallèle au piston 4. L'aimant 12 est, par exemple, logé dans un espace ménagé entre une extrémité basse de la pièce polaire 22 et la pièce polaire 23. Le détecteur magnétique 13 est, par exemple, logé dans un espace ménagé entre une extrémité basse de la pièce polaire 21 et la pièce polaire 23. Par extrémité basse d'une pièce polaire, 21 et 22, on entend extrémité la plus éloignée du piston 4.

Sur la figure 2, la pièce magnétique mobile 19 est formée par un manchon. Le manchon 19 est par exemple moulé dans le piston 4, à proximité du trou de dilatation 20, du coté d'une tige de poussée, c'est à dire du côté opposé à un fond de maître cylindre. Le manchon 19 peut également être monté dans le piston. Ainsi, en position repos du maître cylindre, c'est-à-dire lorsque la pédale de frein n'est pas actionnée, le circuit magnétique 9 est ouvert. Autrement dit, le manchon 19, est éloignée du circuit magnétique.

Dans la configuration telle que représentée à la figure 2, lorsque le circuit magnétique 9 est ouvert, les feux de stop sont éteints. Lors d'un freinage, un conducteur appui sur la pédale de frein, qui actionne le maître cylindre. Le piston 4 se déplace à l'intérieur de l'alésage. La pièce mobile 19 se rapproche du circuit magnétique 9, et ferme le circuit. La valeur du champ magnétique mesurée par le capteur 13 varie. Le capteur 13 envoie alors une information au système électrique pour allumer les feux de stop.

Il est nécessaire que les feux de stop restent allumés pendant toutes la durée du freinage. La pièce mobile 19 doit donc être suffisamment longue pour que le circuit magnétique soit fermé pendant tout le freinage, c'est à dire pendant toute l'avancée du piston 4 dans l'alésage. Ainsi, les feux de stop ne s'éteignent pas inopinément au milieu du freinage. Ils doivent également rester allumés pendant toute la durée de retour en position repos du maître cylindre, c'est à dire pendant toute la durée de décélération du véhicule, jusqu'à l'arrêt ou une nouvelle accélération. La longueur de la pièce mobile 19 doit donc être sensiblement égale à une course utile du piston 4.

Lorsque la pédale de frein est relâchée, le piston 4 revient en position repos, entraînant avec lui la pièce mobile 19. Le circuit magnétique 9 est alors à nouveau ouvert. La valeur du champ magnétique mesurée par le capteur 13 varie. Le capteur 13 commande l'extinction des feux de stop au système électrique.

Le circuit magnétique 9 est stationnaire. La pièce magnétique 19 est mobile et vient fermer le circuit magnétique 9 lors du freinage. Les feux de stop sont alors allumés.

La pièce mobile 19 se déplace avant même la montée en pression dans la chambre du maître cylindre. La variation du champs magnétique mesurée par le capteur 13 a lieu avant même le freinage. On a donc bien une détection précoce d'un freinage, et un allumage des feux de stop synchronisé avec le freinage.

Sur la figure 3 est représenté un autre exemple de réalisation de l'invention. La pièce mobile 19 est moulée à l'intérieur du piston 4.

La pièce mobile 19, sur la figure 3, est formée par une bague 19. La bague 19 est, par exemple, disposée à proximité du trou de dilatation 20. Le circuit magnétique 9 est positionné en vis à vis de la bague 19. C'est-à-dire que la bague 19 ferme le circuit magnétique 9 lorsque le maître cylindre est au repos. La valeur du champ magnétique est mesurée par le capteur 13. Le capteur 13 envoie une information à un système électrique (non représenté) qui commande l'extinction ou l'allumage des feux de stop.

Lors d'un freinage, la pédale de frein est enfoncée, ce qui commande l'avancée du piston 4 à l'intérieur de l'alésage. Le mouvement de translation du piston 4 entraîne un mouvement de translation de la bague 19. La bague 19 s'éloigne donc du circuit magnétique 9. Le circuit magnétique 9 est alors ouvert. La valeur du champ magnétique mesurée par le capteur 13 se modifie. Une information envoyée au système électrique (non représenté) commande l'allumage des feux.

Pendant toute la durée d'une course du piston 4, le circuit magnétique 9 est ouvert. L'ouverture du circuit magnétique 9 s'accompagne d'un allumage des feux de stop.

Lorsque la pédale de frein est relâchée, le piston 4 revient en position initiale. La bague 19 se retrouve donc en position telle, qu'elle ferme le circuit magnétique 9. La valeur du champ magnétique mesurée par le capteur 13 varie à nouveau. Une information est envoyée au circuit électrique afin d'éteindre les feux de stop.

Ainsi, dans l'exemple de réalisation représenté à la figure 3, lorsque le circuit magnétique est fermé les feux de stop sont éteints. Lorsque le piston 4 se déplace en translation dans le maître cylindre, c'est-à-dire lorsque la pédale de frein est actionnée, la bague 19 se déplace également. La valeur du champ magnétique mesurée par le capteur 13 varie. L'information envoyée au circuit électrique est alors telle, que les feux de stop sont allumés. Pendant toute la durée du déplacement du piston 4, le circuit magnétique est ouvert, et les feux de stop allumés.

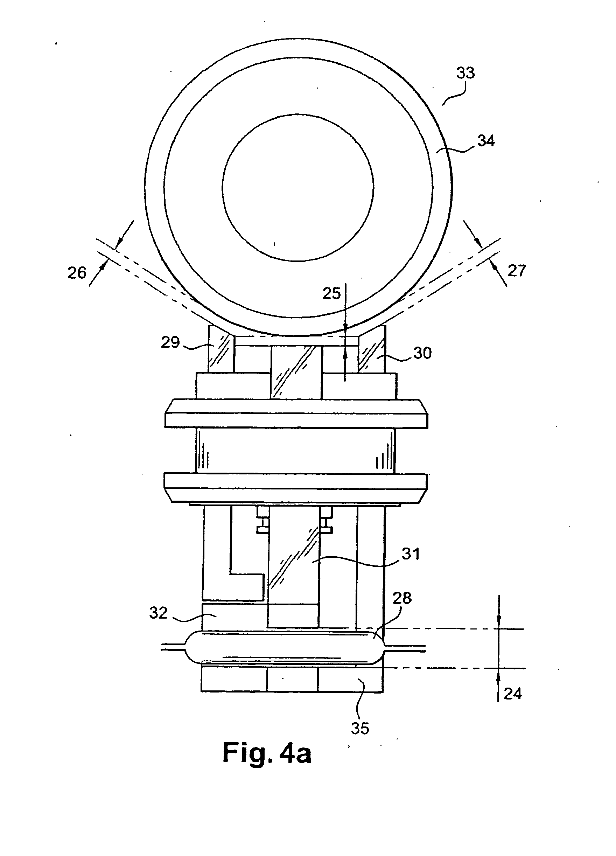

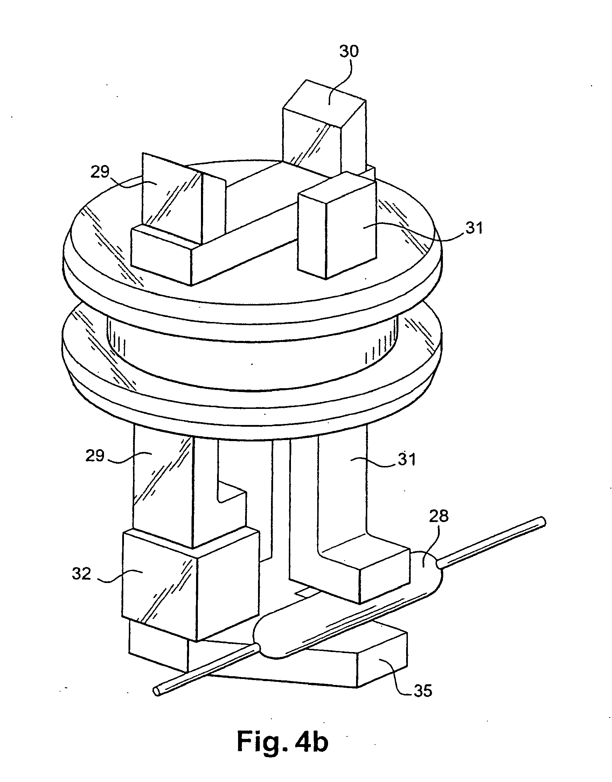

Les figures 4a et 4b représentent un mode particulier de réalisation de l'invention. Le capteur est muni d'un interrupteur à lames souples (ILS). Le circuit ILS est par exemple contenu dans une ampoule 28.

Le circuit magnétique comporte trois pièces polaires 29, 30 et 31, fixes. Dans l'exemple représenté, les pièces polaires 29, 30 et 31 sont parallèles entre elles et perpendiculaires à un corps 33 de maître cylindre. Une des trois pièces polaires 30 se termine, à une extrémité opposée au maître cylindre, par un socle 35.

Une pièce magnétique mobile (non visible) est logée dans le piston 34, ou à l'intérieur du piston 34. Avantageusement, au repos, la pièce mobile est en regard des pièces polaires 29 et 30. Cependant on peut prévoir que la pièce mobile est éloignée des pièces polaires 29, 30 et 31 quand le piston 34 n'est pas actionné.

Un détecteur ILS étant très sensible aux flux magnétiques, il est préférable de n'avoir aucun champ magnétique, ou un champ magnétique le plus faible possible, dans le circuit contenant l'ampoule 28 lorsqu'un piston 34 du maître cylindre est en position repos, afin d'assurer un fonctionnement de détection le plus sûr. Pour cela, on utilise deux circuits magnétiques. Dans un premier circuit magnétique, formé par deux pièces polaires 29 et 30, est logé un aimant 32. Par exemple, l'aimant est situé entre une extrémité basse de la pièce polaire 29 et le socle 35 de la pièce polaire 30. Un flux magnétique résiduel circule dans ce circuit quand le piston 34 n'est pas actionné. Dans un second circuit, formé par la pièce polaire 29 et la pièce polaire 31, est logé l'ampoule ILS 28. Dans ce second circuit ne circule aucun flux magnétique lorsque le piston 34 n'est pas actionné.

Une avancée du piston 34 entraîne une avancée de la pièce magnétique mobile, qui se rapproche des pièces polaires 29 et 30 puis de la pièce polaire 31. Ainsi, un flux magnétique circule dans le premier circuit, puis dans le deuxième.

Dans l'exemple de réalisation représenté à la figure 4a, il existe, d'une part, un premier entrefer 26 formé entre la pièce polaire 29 et la pièce mobile du piston 34, et un deuxième entrefer 27 formé entre la pièce polaire 30 et la pièce mobile. Ces deux entrefers 26 et 27 permettent à un flux magnétique résiduel de circuler alors même que le piston 34 n'est pas actionné.

D'autre part, il existe un troisième entrefer 25, entre la pièce polaire 31 et la pièce mobile du piston 34, et un quatrième entrefer 24, entre la pièce polaire 29 et la pièce polaire 31, ne laissant passer, de manière avantageuse, qu'un flux magnétique suffisamment faible pour ne pas activer l'ampoule ILS, quand le piston 34 n'est pas actionné.

Pour cela, il est avantageux que la somme des premier et deuxième entrefers 26 et 27 soit inférieure à la somme des premier, deuxième et troisième entrefers 26, 25, 24. De manière encore plus avantageuse, la somme des premier et deuxième entrefers 26 et 27 est strictement supérieure à la somme des premier, deuxième et troisième entrefers 26, 25, 24. Ainsi, l'ampoule ILS 28, contenue dans le circuit formé par les pièces polaires 29 et 31, est parfaitement isolée de tout flux magnétique résiduel quand le piston 34 n'est pas actionné. Le circuit magnétique contenant l'aimant 32, lui, permet à un flux magnétique résiduel de circuler. Dès que le piston 34 avance, le circuit magnétique comprenant l'ampoule 28 est fermé et un flux magnétique peut y circuler.

Le capteur, ou détecteur magnétique, peut également être constitué par une cellule à effet Hall, ou à effet magnéto-résistif (AMR, GMR).

La pièce mobile peut être moulée, surmoulée ou fixée sur le piston. Cependant, dans un exemple de réalisation préféré de l'invention, la pièce mobile est moulée ou fixée dans le piston. La pièce mobile peut être, par exemple, surmoulée dans un piston en plastique.

Il est également possible de monter la pièce mobile à l'intérieur du piston. On utilise alors, par exemple, comme pièce mobile une bague ou un manchon fendu. On insère la pièce fendue à l'intérieur du piston, en resserrant la pièce dans son diamètre. Une fois insérée à l'intérieur du piston, on relâche la pièce fendue, qui se détend jusqu'à épouser un contour intérieur du piston.

Ainsi, dans le cas notamment d'un maître cylindre à trou de dilatation, un contour extérieur du piston est parfaitement lisse. Quand le piston coulisse dans un corps de maître cylindre, il vient notamment en contact avec au moins une coupelle d'étanchéité. La coupelle d'étanchéité est logée dans un alésage ménagé dans le maître cylindre. L'alésage est ouvert partiellement au niveau d'une chambre de pression dans laquelle coulisse le piston. Un tel mode de réalisation de l'invention, où la pièce mobile est à l'intérieur du piston et le contour extérieur du piston parfaitement lisse, permet de ne pas détériorer la coupelle d'étanchéité lors de l'avancée du piston.

Tout autre moyen de fixation permettant un déplacement en translation à l'intérieur du corps de maître cylindre de la pièce mobile entre dans le cadre de l'invention.

L'aimant polarisé peut être en matériau à faible perte magnétique en température du type AlNiCo ou samarium-cobalt.

D'une manière générale, le maître cylindre peut être fabriqué en tout matériau non magnétique, tel que de l'aluminium.

La pièce polaire et l'élément mobile, formant le circuit magnétique, sont par exemple en matériaux ferromagnétiques. Selon la précision requise, les pièces polaires sont par exemple fabriquées en acier classique type XC10, ou en acier à hautes propriétés ferromagnétiques X6CrNiMoTi17-12-2 ou X5CrNiMo17-12-2, tel que les commercialise la société Sandvik (référence : R Fe 80 C).

Un tel capteur peut servir pour toutes les fonctions nécessitant de connaître la position d'une pièce par rapport à une autre.

## Revendications

1. Maître cylindre pour un système de freinage d'un véhicule automobile comprenant
- un corps (2) de maître cylindre (1), en matériau non magnétique,
- un alésage (3) ménagé dans le corps du maître cylindre,
- une chambre de pression (5) à volume variable, à l'intérieur de l'alésage,
- un piston (4) coulissant dans l'alésage et faisant varier le volume de la chambre de pression,
- un dispositif de détection (9) d'actionnement du système de freinage, fixé sur le corps du maître cylindre, en vis à vis d'un passage du piston, le dispositif de détection étant muni d'au moins un circuit magnétique (9) susceptible d'être ouvert ou fermé par une pièce magnétique (19), **caractérisé en ce que** le circuit magnétique comporte au moins deux pièces polaires (10,11), un aimant (12) et un élément magnéto-sensible (13) , **en ce que** la pièce magnétique est mobile étant solidaire d'un piston du maître cylindre et **en ce que** le circuit magnétique est muni de deux pièces polaires (10, 11), formant des entrefers, à l'endroit de l'aimant à l'endroit de l'élément magnéto-sensible, et à l'endroit de la pièce mobile (19).

2. Maître cylindre selon la revendication 1, **caractérisé en ce que** la pièce magnétique est une bague (19), et qu'en position repos du maître cylindre, le circuit magnétique est fermé.

3. Maître cylindre selon la revendication 1, **caractérisé en ce que** la pièce magnétique est un manchon (19) dont la longueur est sensiblement égale à une course utile du piston, et qu'en position repos du maître cylindre, le circuit magnétique est ouvert.

4. Maître cylindre selon l'une des revendications 1 à 3, **caractérisé en ce que** le circuit magnétique est muni de trois pièces polaires (21, 22, 23) formant approximativement un U, deux pièces polaires (21 et 22) formant deux branches du U, une pièce polaire (23) formant une base du U, un entrefer étant formé à l'endroit de l'aimant, un autre entrefer étant formé à l'endroit de l'élément magnéto-sensible, et un troisième entrefer étant formé à l'endroit de la pièce mobile.

5. Maître cylindre selon l'une des revendications 1 à 4, **caractérisé en ce que** l'élément magnéto-sensible est un capteur de variation du champ magnétique de type cellule Hall ou magnéto-résistif.

6. Maître cylindre selon l'une des revendications 1 à 4, **caractérisé en ce que** l'élément magnéto-sensible est un capteur de variation du champ magnétique de type interrupteur à lames souples (ILS).

7. Maître cylindre selon la revendication 6, **caractérisé en ce que** ledit dispositif de détection comporte un premier circuit magnétique et un deuxième circuit magnétique, le premier circuit étant muni d'un aimant et le deuxième circuit magnétique étant muni d'un circuit de type ILS, de manière à ce que lorsque le piston est au repos un flux magnétique susceptible de circuler dans le deuxième circuit magnétique est insuffisant pour activer le circuit ILS.

8. Maître cylindre selon la revendication 7, **caractérisé en ce que** ledit premier circuit magnétique est formé par deux pièces polaires (29 et 30), un aimant (32) étant logé dans le premier circuit magnétique, ledit deuxième circuit magnétique étant formé par la première pièce polaire (29) et une troisième pièce polaire (31).

9. Maître cylindre selon la revendication 8, **caractérisé en ce qu**'un entrefer (26) est formé entre la pièce polaire (29) et une pièce magnétique mobile portée par un piston (34) du maître cylindre, un deuxième entrefer (27) est formé entre la pièce polaire (30) et la pièce mobile, un quatrième entrefer (24) est formé entre la pièce polaire (29) et la pièce polaire (31), et un troisième entrefer (25) est formé entre la pièce polaire (31) et la pièce mobile.

10. Maître cylindre selon la revendication 9, **caractérisé en ce qu**'une somme des premier et deuxième entrefers (26 et 27) est inférieure à une somme des premier, deuxième et troisième entrefers (24, 25 et 26).

11. Maître cylindre selon l'une des revendications 7 à 10, **caractérisé en ce que** les pièces polaires (29, 30 et 31) sont parallèles entre elles, et perpendiculaires à une avancée du piston (34).

12. Maître cylindre selon l'une des revendications 1 à 11, **caractérisé en ce que** les pièces polaires et la pièce mobile sont en matériaux ferromagnétiques.

## Claims

1. Master cylinder for a motor vehicle braking system, comprising
- a master cylinder (1) body (2) made of non-magnetic material,
- a bore (3) formed in the body of the master cylinder,
- a variable-volume pressure chamber (5) inside the bore,
- a piston (4) sliding in the bore and varying the volume of the pressure chamber,
- a detection device (9) detecting actuation of the braking system, fixed to the body of the master cylinder, facing a passage of the piston, the detection device being equipped with at least one magnetic circuit (9) that can be opened or closed by a magnetic piece (19), **characterized in that** the magnetic circuit comprises at least two pole pieces (10, 11), a magnet (12) and a magnetically sensitive element (13), **in that** the magnetic piece is moving being secured to a piston of the master cylinder and **in that** the magnetic circuit is equipped with two pole pieces (10, 11) forming air gaps at the location of the magnet, at the location of the magnetically sensitive element and, at the location of the moving piece.

2. Master cylinder according to claim 1, **characterized in that** the magnetic piece is a ring (19) and **in that**, when the master cylinder is in the rest position, the magnetic circuit is closed.

3. Master cylinder according to claim 1, **characterized in that** the magnetic piece is a sleeve tube (19) the length of which is roughly equal to a working stroke of the piston, and **in that** when the master cylinder is in the rest position, the magnetic circuit is open.

4. Master cylinder according to one of claims 1 to 3, **characterized in that** the magnetic circuit is equipped with three pole pieces (21, 22, 23) approximately forming a U and two pole pieces (21 and 22) forming two branches of the U and one pole piece (23) forming the base of the U, an air gap being formed at the location of the magnet, another air gap being formed at the location of the magnetically sensitive element, and a third air gap being formed at the location of the moving piece.

5. Master cylinder according to one of claims 1 to 4, **characterized in that** the magnetically sensitive element is a magnetic-field-variation sensor of the Hall cell or magneto-resistive type.

6. Master cylinder according to one of claims 1 to 4, **characterized in that** the magnetically sensitive element is a magnetic-field-variation sensor of the reed switch type.

7. Master cylinder according to claim 6, **characterized in that** the said detection device comprises a first magnetic circuit and a second magnetic circuit, the first circuit being equipped with a magnet and the second magnetic circuit being equipped with a circuit of the reed switch type, so that when the piston is at rest, a magnetic flux that may flow through the second magnetic circuit is not enough to activate the reed switch circuit.

8. Master cylinder according to claim 7, **characterized in that** the said first magnetic circuit is formed of two pole pieces (29 and 30), a magnet (32) being housed in the first magnetic circuit, said second magnetic circuit being formed by the first pole piece (29) and a third pole piece (31).

9. Master cylinder according to claim 8, **characterized in that** an air gap (26) is formed between the pole piece (29) and a moving magnetic piece carried by a piston (34) of the master cylinder, a second air gap (27) is formed between the pole piece (30) and the moving piece, a fourth air gap (24) is formed between the pole piece (29) and the pole piece (31) and a third air gap (25) is formed between the pole piece (31) and the moving piece.

10. Master cylinder according to claim 9, **characterized in that** a sum of the first and second air gaps (26 and 27) is less than a sum of the first, second and third air gaps (24, 25 and 26).

11. Master cylinder according to one of claims 7 to 10, **characterized in that** the pole pieces (29, 30 and 31) are mutually parallel and are perpendicular to a forward travel of the piston (34).

12. Master cylinder according to one of claims 1 to 11, **characterized in that** the pole pieces and the moving piece are made of ferromagnetic materials.

## Patentansprüche

1. Hauptzylinder für ein Kraftfahrzeugbremssystem, mit
- einem Körper (2) eines Hauptzylinders (1) aus nicht magnetischem Material,
- einer im Körper des Hauptzylinders ausgebildeten Bohrung (3),
- einer Druckkammer (5) mit variablem Volumen in der Bohrung,
- einem Kolben (4), der in der Bohrung gleitet und das Volumen der Druckkammer variieren lässt,
- einer Vorrichtung (9) zur Erfassung der Betätigung des Bremssystems, die gegenüber einem Durchgang des Kolbens am Körper des Hauptzylinders befestigt ist, wobei die Erfassungsvorrichtung mit mindestens einem Magnetkreis (9) versehen ist, der von einem Magnetteil (19) geöffnet oder geschlossen werden kann, **dadurch gekennzeichnet, dass** der Magnetkreis mindestens zwei Polschuhe (10, 11), einen Magneten (12) und ein magnetempfindliches Element (13) aufweist, dass das Magnetteil beweglich und mit einem Kolben des Hauptzylinders fest verbunden ist und dass der Magnetkreis mit zwei Polschuhen (10, 11) versehen ist, die an der Stelle des Magneten, an der Stelle des magnetempfindlichen Elements und an der Stelle des beweglichen Teils (19) Spalte bilden.

2. Hauptzylinder nach Anspruch 1, **dadurch gekennzeichnet, dass** das Magnetteil ein Ring (19) ist und dass in der Ruhestellung des Hauptzylinders der Magnetkreis geschlossen ist.

3. Hauptzylinder nach Anspruch 1, **dadurch gekennzeichnet, dass** das Magnetteil eine Hülse (19) ist, deren Länge im Wesentlichen dem Betätigungsweg des Kolbens entspricht, und dass in der Ruhestellung des Hauptzylinders der Magnetkreis offen ist.

4. Hauptzylinder nach einem der Ansprüche 1 bis 3, **dadurch gekennzeichnet, dass** der Magnetkreis mit drei Polschuhen (21, 22, 23) versehen ist, die annähernd ein U bilden, wobei zwei Polschuhe (21 und 22) zwei Schenkel des U bilden, ein Polschuh (23) eine Basis des U bildet, ein Spalt an der Stelle des Magneten ausgebildet ist, ein weiterer Spalt an der Stelle des magnetempfindlichen Elements ausgebildet ist und ein dritter Spalt an der Stelle des beweglichen Teils ausgebildet ist.

5. Hauptzylinder nach einem der Ansprüche 1 bis 4, **dadurch gekennzeichnet, dass** das magnetempfindliche Element ein Sensor zur Erfassung einer Magnetfeldänderung vom Typ Hall-Zelle oder magnetoresistiver Sensor ist.

6. Hauptzylinder nach einem der Ansprüche 1 bis 4, **dadurch gekennzeichnet, dass** das magnetempfindliche Element ein Sensor zur Erfassung einer Magnetfeldänderung vom Typ Reed-Schalter ist.

7. Hauptzylinder nach Anspruch 6, **dadurch gekennzeichnet, dass** die Erfassungsvorrichtung einen ersten Magnetkreis und einen zweiten Magnetkreis aufweist, wobei der erste Kreis mit einem Magneten versehen ist und der zweite Magnetkreis mit einem Kreis vom Typ Kreis mit Reedschalter versehen ist, so dass in der Ruhestellung des Kolbens ein Magnetfluss, der im zweiten Magnetkreis zirkulieren kann, nicht ausreicht, um den Kreis mit Reed-Schalter zu aktivieren.

8. Hauptzylinder nach Anspruch 7, **dadurch gekennzeichnet, dass** der erste Magnetkreis durch zwei Polschuhe (29 und 30) gebildet ist, wobei ein Magnet (32) im ersten Magnetkreis angeordnet ist, und der zweite Magnetkreis durch den ersten Polschuh (29) und einen dritten Polschuh (31) gebildet ist.

9. Hauptzylinder nach Anspruch 8, **dadurch gekennzeichnet, dass** ein Spalt (26) zwischen dem Polschuh (29) und einem von einem Kolben (34) des Hauptzylinders getragenen beweglichen Magnetteil gebildet ist, ein zweiter Spalt (27) zwischen dem Polschuh (30) und dem beweglichen Teil gebildet ist, ein vierter Spalt (24) zwischen dem Polschuh (29) und dem Polschuh (31) gebildet ist und ein dritter Spalt (25) zwischen dem Polschuh (31) und dem beweglichen Teil gebildet ist.

10. Hauptzylinder nach Anspruch 9, **dadurch gekennzeichnet, dass** eine Summe aus dem ersten und dem zweiten Spalt (26 und 27) kleiner ist als eine Summe aus dem ersten, zweiten und dritten Spalt (24, 25 und 26).

11. Hauptzylinder nach einem der Ansprüche 7 bis 10, **dadurch gekennzeichnet, dass** die Polschuhe (29, 30 und 31) parallel zueinander und senkrecht zu einer Vorwärtsbewegung des Kolbens (34) verlaufen.

12. Hauptzylinder nach einem der Ansprüche 1 bis 11, **dadurch gekennzeichnet, dass** die Polschuhe und das bewegliche Teil aus ferromagnetischem Material bestehen.
